# EUROPEAN PATENT APPLICATION

(11) **EP 4 468 273 A1**
(43) Date of publication of application: **27.11.2024**
(21) Application number: 23175493.8
(22) Date of filing: 25.05.2023
(51) Int. Cl.: G08G 1/16

(54) **METHOD FOR DETERMINING A LANE INVASION RISK, METHOD FOR CONTROLLING AN EGO-VEHICLE, DATA PROCESSING APPARATUS, COMPUTER PROGRAM, COMPUTER-READABLE STORAGE MEDIUM, AND USE**

(71) Applicant: Volvo Car Corporation, 405 31 Göteborg (SE)
(72) Inventor: PEREZ BARRERA, Oswaldo, 40531 Göteborg (SE); LENNARTSSON, Anders, 40531 Göteborg (SE)
(74) Representative: Maiwald GmbH

(57) **Abstract**

The disclosure relates to a method for determining a lane invasion risk associated with at least one out of at least two vehicles (34, 36) traveling behind one another on a lane adjacent to an ego-lane on which an ego-vehicle (10) is traveling. The method comprises receiving or determining a distance information indicative of a distance between the at least two vehicles (34, 36), a speed information indicative of a speed of each of the at least two vehicles (34, 36), and a safe braking distance information indicative of a safe braking distance of at least a rearward one of the at least two vehicles (34, 36). Based thereon, a collision risk between the at least two vehicles (34, 36) is determined. Furthermore, a lane invasion risk is determined for the at least one of the at least two vehicles (34, 36) if a collision risk has been determined. Moreover, a method for controlling an ego-vehicle (10) is explained. Additionally, a data processing apparatus, a computer program, and a computer-readable storage medium is presented. Further, a use of detection data is explained.

## Description

The present disclosure relates to a method for determining a lane invasion risk associated with at least one out of at least two vehicles traveling behind one another on a lane adjacent to an ego-lane on which an ego-vehicle is traveling.

Furthermore, the present disclosure is directed to a method for controlling an ego-vehicle.

The present disclosure is additionally directed to a data processing apparatus, a computer program, and a computer-readable storage medium.

The present disclosure also relates to a use of detection data comprising a representation of the at least two vehicles.

Operating a vehicle which is traveling on a road with two or more lanes associated with a traffic flow into the same direction is a complex task. This is due to the fact that the travel of the vehicle may not only be influenced by traffic participants, e.g. vehicles, traveling on the same lane, but also by traffic participants, e.g. vehicles, traveling on adjacent lanes. In order to safely operate the vehicle, all of those traffic participants need to be observed such that the operation of the vehicle may react to an action of one or more of these traffic participants, if necessary. This applies to vehicles being operated by a human driver only, to fully autonomous vehicles and to partially autonomous vehicles. The latter category also includes vehicles in which a human driver is present, but which are operated using a driver assistance system.

Consequently, it is an objective of the present disclosure to further improve the safety of a vehicle being operated on a road with two or more lanes.

The problem is at least partially solved or alleviated by the subject matter of the independent claims of the present disclosure, wherein further examples are incorporated in the dependent claims.

According to a first aspect, there is provided a method for determining a lane invasion risk associated with at least one out of at least two vehicles traveling behind one another on a lane adjacent to an ego-lane on which an ego-vehicle is traveling, the method comprises:
- receiving or determining a distance information indicative of a distance between the at least two vehicles, a speed information indicative of a speed of each of the at least two vehicles, and a safe braking distance information indicative of a safe braking distance of at least a rearward one of the at least two vehicles,
- determining a collision risk between the at least two vehicles based on the safe braking distance information, the distance information and the speed information,
- determining a lane invasion risk for the at least one of the at least two vehicles if a collision risk has been determined.

In this context, the ego-vehicle is a vehicle on which the present method is executed. Alternatively, the method is executed remote from the ego-vehicle, but from the perspective of the ego-vehicle. Consequently, the ego-lane is the lane on which the ego-vehicle is traveling. A safe braking distance is a distance needed by the corresponding vehicle to safely stop. Furthermore, it is understood that executing the present method requires a road comprising at least two lanes, i.e. at least the ego-lane and the lane adjacent to the ego-lane, being associated with a traffic flow into the same direction. In situations in which the ego-vehicle is traveling on one lane, i.e. the ego-lane, and other vehicles, i.e. the mentioned at least two vehicles, are traveling on a lane adjacent to the ego-lane, the vehicles traveling on the lane adjacent to the ego-lane, may have an influence on the ego-lane and the ego-vehicle. This is especially the case, if the vehicles traveling on the lane adjacent to the ego-lane are involved in an accident. Such an accident does not involve the ego-vehicle. However, due to the accident, one of the at least two vehicles may invade the ego-lane, i.e. at least a portion of one of the at least two vehicles may enter the ego-lane as a consequence of the accident. This may lead to a follow-up accident or a secondary accident involving the ego-vehicle. However, using the method according to the present disclosure, a collision risk and, based thereon, a lane invasion risk may be determined. Consequently a basis for avoiding such a follow-up accident or such a secondary accident is provided. It is emphasized that the collision risk and the lane invasion risk is determined before the actual collision or the actual lane invasion happens. Altogether, road safety is enhanced. In a case in which no collision risk has been determined, the method may be abandoned, since in such a case there is no lane invasion risk resulting from a collision of the at least two vehicles.

Due to the fact that using the method according to the present disclosure avoids a follow-up accident or a secondary accident, the method according to the present disclosure may as well be called a method for avoiding a secondary accident.

According to an example, the ego-vehicle is a fully or partially autonomous vehicle.

It is noted that the method according to the present disclosure can be executed on the ego-vehicle, i.e. on a computing device located on or in the ego-vehicle, or from the perspective of the ego-vehicle. In the latter case, the method can be executed on a computing device remote from the ego-vehicle, such as a cloud computing device.

It is noted that, in accordance with the present disclosure, a risk, e.g. the lane invasion risk or the collision risk, may be understood in a binary manner. Consequently, determining a risk, e.g. determining the lane invasion risk order collision risk, means determining an existence or non-existence of a risk. Alternatively, also in accordance with the present disclosure, a risk may be understood in a continuous or gradual manner. In this case, determining a risk, e.g. determining the lane invasion risk or the collision risk, means determining a risk level and comparing the risk level to a risk level threshold. According to a further alternative, a risk may be understood to cover different risk categories such as high risk, low risk and medium risk. In such a case, determining a risk means determining a risk category.

In an example, the safe braking distance information is determined based on the speed information. Thus, the fact that a safe braking distance is a function of a current speed is respected. Consequently, an accuracy of the determination of the collision risk, and, based thereon, an accuracy of the determination of the lane invasion risk, is enhanced.

In an example, the collision risk may be determined by comparing the safe braking distance to a distance between the two vehicles. It is understood that the safe braking distance and the distance need to be determined or received for the same point in time or at least for points in time differing by less than a predefined time tolerance. In a case in which the collision risk is understood in a binary manner, an existence of a collision risk may be determined, if the safe braking distance exceeds the distance between the at least two vehicles. In a case in which the collision risk is understood in a gradual manner, a certain non-zero collision risk may be determined as a function of the difference between the safe braking distance and the distance between the at least two vehicles. It is noted that a non-zero collision risk may as well be determined in a situation in which the distance exceeds the safe braking distance. Subsequently, the determined collision risk is compared to a predefined risk threshold.

In an example, the method further comprises receiving detection data comprising a representation of the at least two vehicles and determining the distance information and/or the speed information based on the detection data. In other words, the detection data comprises a representation of at least one pair of vehicles traveling behind one another on the lane adjacent to the ego-lane. Based on the detection data, the distance information and/or the speed information may be determined in a reliable manner.

According to an example, the distance between the at least two vehicles and/or the speed of the at least two vehicles is monitored. This means that the distance information and/or the speed information is determined continuously our regularly based on the detection data. Consequently, a current speed information and/or a current distance information is always available. Moreover, based on such a monitoring, changes in the distance and/or the speed may be easily detected.

In an example, the detection data comprises image data provided by an optical camera and/or an infrared camera. Additionally or alternatively, the detection data may comprise image data provided by a radar unit or a lidar unit. In this context, the optical camera, the infrared camera, the radar unit and/or lidar unit may be installed on the ego-vehicle. Alternatively or additionally, the optical camera, the infrared camera, the radar unit and/or lidar unit may be installed remote from the ego-vehicle but take the perspective of the ego-vehicle.

According to an example, the collision risk between the at least two vehicles is determined, if the leading one of the at least two vehicles performs an abrupt braking maneuver. In other words, an abrupt braking maneuver is used as a trigger event. The abrupt braking maneuver may be determined based on the speed data. In an example, a breaking maneuver is abrupt, if the speed is reduced by at least 10 km/h in one second. Thus, the method according to the present disclosure does not need to be executed at all times, but only in case an abrupt braking maneuver is determined. This renders the execution of the method efficient.

In an example, determining the lane invasion risk further comprises receiving a weight information indicative of a weight of each of the at least two vehicles or determining a weight of each of the at least two vehicles. A weight of each of the at least two vehicles and especially a weight difference between the at least two vehicles, has an important influence on the risk that one of the at least two vehicles invades the ego-lane after an accident. In an example in which the leading one of the at least two vehicles is found to be heavier than the trailing one of the at least two vehicles, the lane invasion risk is comparatively low since the trailing vehicle is not able to push the leading vehicle into the ego-lane. The opposite case, i.e. a case in which the trailing vehicle is heavier than the leading vehicle, may be considered more risky. This means that in such a case a comparatively high lane invasion risk may be determined.

In an example, determining a lane invasion risk comprises determining one or more of
- a lateral offset between the at least two vehicles based on the detection data,
- a lateral position on the adjacent lane of the at least two vehicles based on the detection data,
- a lateral distance of each of the at least two vehicles from the ego-lane based on the detection data, and
- a width of each of the at least two vehicles.

In this context, a lateral offset between the at least two vehicles is defined as a distance between longitudinal centerlines of the vehicles. The longitudinal centerlines are arranged in parallel to the standard forward traveling direction of the vehicles. The lateral offset between the at least two vehicles has an important influence on the risk whether one of the at least two vehicles is pushed on the ego-lane following an accident, e.g. a rear-end collision, of the at least two vehicles. In a case in which there is no lateral offset or a lateral offset is below a predefined offset threshold, a lane invasion risk may be considered to be low since in a case of an accident, the leading vehicle will be substantially pushed along a forward direction, i.e. along the lane. In other words, in this case, the vehicles involved in an accident are not inclined to turn or are only inclined to turn a little as a consequence of the accident. A lateral position on the adjacent lane defines a distance between each of the at least two vehicles traveling on the adjacent lane and a marking line separating the ego-lane and the lane adjacent to the ego-lane. This distance has an important influence on the risk that one of the at least two vehicles invades the ego-lane since it describes a lateral space into which at least one of the at least two vehicles may be pushed following an accident without invading the ego-lane. The same applies to a width of the at least two vehicles. In this context, the width may be determined based on the detection data. Alternatively, a width information indicative of the width may be received from a database. It is understood, that all of the above elements may be used either separately or in any possible combination. Altogether, an accuracy of a determination of a lane invasion risk is enhanced.

According to an example, determining a lane invasion risk further comprises triggering parametrizing and executing a simulation model. In other words, a simulation model is used in order to determine the lane invasion risk. This simulation model needs to be parameterized. The parameterization may be done based on the detection data. Consequently, a lane invasion risk may be determined with high accuracy.

According to an example, determining a lane invasion risk further comprises receiving turning behavior data indicating a turning behavior of at least one of the at least two vehicles in case of a collision. The turning behavior data may for example be received from an accident database. In such a database, accidents from the past may have been documented. Consequently, in order to determine a lane invasion risk, the database may be consulted and a documented case of the database may be selected which has a high or comparatively the highest similarity to a current situation. In a very simple example, the database comprises a turning status for each of the accidents from the past, wherein the turning status is indicative of whether one of the at least two vehicles has turned following an accident.

In an example, the method further comprises
- determining a distance between the ego-vehicle and each of the at least two vehicles indicated by the detection data, and
- ignoring all vehicles indicated by the detection data and being located at a distance from the ego-vehicle exceeding a predefined distance threshold and/or being located behind the ego-vehicle along a traveling direction.

This enhances the efficiency of the method according to the present disclosure since only those vehicles are considered from which potentially a lane invasion risk originates.

In a further example, the method further comprises ignoring vehicles indicated by the detection data and being located behind or laterally adjacent to the ego-vehicle. This also enhances the efficiency of the method according to the present disclosure since from such vehicles a future lane invasion risk may not originate.

In an example, determining a safe braking distance of each of the at least two vehicles comprises determining a vehicle model of at least the rearward one of the at least two vehicles. Among other things, a safe braking distance depends on a performance of a braking system of the vehicle. Knowing a vehicle model at least provides a hint on a performance of a braking system of the vehicle. Consequently, the safe braking distance may be precisely determined.

According to an example, the vehicle model is detected using a computer vision technique being applied to the detection data.

In an example, determining a safe braking distance of each of the at least two vehicles comprises requesting safe braking distance data indicating the safe braking distance from a database based on the determined vehicle model and the monitored traveling speed. The database may provide a safe braking distance for each vehicle model. It is noted that this database may be remote from the ego-vehicle or may be integrated into the ego-vehicle. In any case, a safe braking distance may be determined with high precision.

According to a second aspect, there is provided a method for controlling an ego-vehicle. The method comprises:
- determining a lane invasion risk using the method according to the first aspect of the present disclosure, and
- triggering an avoidance maneuver if a lane invasion risk has been determined.

In other words, in a case in which a lane invasion risk has been determined, the ego-vehicle is operated in a manner to avoid a secondary accident. Obviously, in a case in which no lane invasion risk has been determined, the method may be abandoned. In this context, an avoidance maneuver describes a driving maneuver to avoid a location where at least one of the at least two vehicles being involved in an accident will probably invade the ego-lane.

According to an example, the avoidance maneuver comprises a breaking maneuver, a lane change maneuver and/or a warning maneuver. The warning maneuver may comprise turning on the hazard lights.

The methods according to the present disclosure may be at least partly computer-implemented, and may be implemented in software or in hardware, or in software and hardware. Further, the methods may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a third aspect, there is provided a data processing apparatus comprising means for carrying out at least one of the methods of the present disclosure. Using such a data processing apparatus, a collision risk and, based thereon, a lane invasion risk may be determined. Consequently a basis for avoiding a follow-up accident or a secondary accident is provided. It is emphasized that the collision risk and the lane invasion risk is determined before the actual collision or the lane invasion happens. Altogether, road safety is enhanced.

According to a fourth aspect, there is provided a computer program comprising instructions which, when the computer program is executed by a computer, cause the computer to carry out at least one of the methods of the present disclosure. Using such a computer program, a collision risk and, based thereon, a lane invasion risk may be determined. Consequently a basis for avoiding a follow-up accident or a secondary accident is provided. It is emphasized that the collision risk and the lane invasion risk is determined before the actual collision or the lane invasion happens. Altogether, road safety is enhanced.

According to a fifth aspect, there is provided a computer-readable storage medium comprising instructions which, when executed by a computer, cause the computer to carry out at least one of the methods of the present disclosure. Using such a computer-readable storage medium, a collision risk and, based thereon, a lane invasion risk may be determined. Consequently a basis for avoiding a follow-up accident or a secondary accident is provided. It is emphasized that the collision risk and the lane invasion risk is determined before the actual collision or the lane invasion happens. Altogether, road safety is enhanced.

According to a sixth aspect, there is provided a use of detection data comprising a representation of at least two vehicles on a lane adjacent to an ego-lane for determining a lane invasion risk associated with at least one of the at least two vehicles, wherein the at least two vehicles travel behind one another. Using such detection data, a collision risk and, based thereon, a lane invasion risk may be determined. Consequently a basis for avoiding a follow-up accident or a secondary accident is provided. It is emphasized that the collision risk and the lane invasion risk is determined before the actual collision or the lane invasion happens. Altogether, road safety is enhanced.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows an ego-vehicle comprising a data processing apparatus according to the present disclosure, a computer-readable storage medium according to the present disclosure, and a computer program according to the present disclosure, wherein the vehicle is operated using a method according to the present disclosure for controlling an ego-vehicle which includes executing a method according to the present disclosure for determining a lane invasion risk,
- Figure 2A: illustrates a first traffic situation comprising the ego-vehicle of Figure 1 at a first point in time,
- Figure 2B: illustrates an evolution of the traffic situation of Figure 2A at a later point in time,
- Figure 3: illustrates examples of turning behavior of a vehicle following a rear-end collision,
- Figure 4: illustrates a second traffic situation comprising the ego-vehicle of Figure 1,
- Figure 5A: illustrates a third traffic situation comprising the ego-vehicle of Figure 1 at a first point in time, and
- Figure 5B: illustrates an evolution of the traffic situation of Figure 5A at a later point in time.

The Figures are merely schematic representations and serve only to illustrate examples of the disclosure. Identical or equivalent elements are in principle provided with the same reference signs.

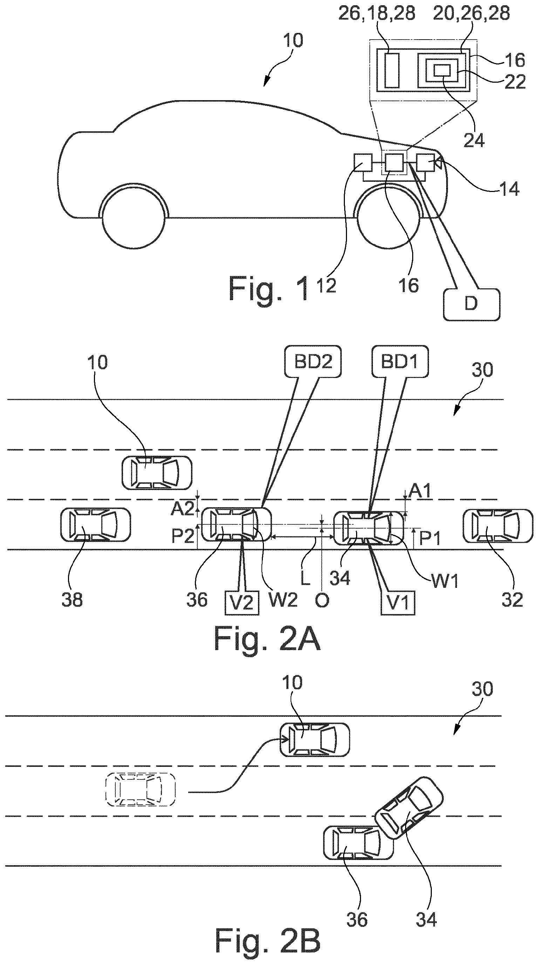

Figure 1 shows an ego-vehicle 10 which in the present example is an autonomous vehicle. This means that the ego-vehicle 10 is able to drive autonomously.

To this end, the ego-vehicle 10 comprises an autonomous driving unit 12 which is only represented schematically. It is understood that, using the autonomous driving unit 12, the ego-vehicle 10 can be autonomously accelerated, decelerated and steered.

The ego-vehicle 10 also comprises a number of sensors 14 configured for detecting an environment of the ego-vehicle 10. All of these sensors 14 are communicatively connected to the autonomous driving unit 12.

In Figure 1, the sensors 14 are represented by a single front-camera. It is understood that this single front camera represents a plurality of sensors which are not limited to cameras.

The ego-vehicle 10 additionally comprises a data processing apparatus 16. In Figure 1, the data processing apparatus 16 is represented as an element separate from the autonomous driving unit 12. It is understood that in an alternative, the autonomous driving unit 12 and the data processing apparatus 16 are combined.

The data processing apparatus 16 is communicatively connected to the sensors 14 and to the autonomous driving unit 12.

The data processing apparatus 16 comprises a data processing unit 18 and a data storage unit 20.

The storage unit 20 comprises a computer-readable storage medium 22.

On the computer-readable storage medium 22, there is provided a computer program 24.

The computer program 24, and, thus, also the computer-readable storage medium 22 comprise instructions which, when executed by the data processing unit 18 or, more generally speaking, a computer, cause the data processing unit 18 or the computer to carry out a method for controlling the ego-vehicle 10.

Consequently, the data processing unit 18 and the data storage unit 20 form means 26 for carrying out the method for controlling the ego-vehicle 10.

As will become clear from the explanations further below, the method for controlling the ego-vehicle 10 comprises executing a method for determining a lane invasion risk associated with at least one out of at least two vehicles traveling behind one another on a lane adjacent to an ego-lane on which the ego-vehicle 10 is traveling.

Thus, the computer program 24, and also the computer-readable storage medium 22 additionally comprise instructions which, when executed by the data processing unit 18 or, more generally speaking, a computer, cause the data processing unit 18 or the computer to carry out the method for determining the lane invasion risk associated with at least one out of at least two vehicles traveling behind one another on a lane adjacent to an ego-lane on which an ego-vehicle is traveling.

Consequently, the data processing unit 18 and the data storage unit 20 also form means 28 for carrying out the method for determining the lane invasion risk associated with at least one out of at least two vehicles traveling behind one another on a lane adjacent to an ego-lane on which an ego-vehicle is traveling.

In the following, the method for controlling the ego-vehicle 10 and the method for determining the lane invasion risk associated with at least one out of at least two vehicles traveling behind one another on a lane adjacent to an ego-lane on which an ego-vehicle is traveling will be explained in connection with different traffic situations. In this context, the steps of the method for controlling the ego-vehicle will be designated with reference signs S1x. The steps of the method for determining a lane invasion risk associated with at least one out of at least two vehicles traveling behind one another on a lane adjacent to an ego-lane on which an ego-vehicle is traveling will be designated with reference signs S2x.

Figure 2A and 2B show a first traffic situation at two different points in time.

Both Figures show a road 30 having three lanes provided for traffic flowing into the same direction. In the following, these three lanes will be referred to as left lane, right lane and middle lane. In Figures 2A and 2B, the direction of the traffic is from left to right.

At the point in time represented in Figure 2A, the ego-vehicle 10 is traveling on the middle lane.

On the right lane, four further vehicles 32, 34, 36, 38 are traveling.

The ego-vehicle 10 is operated using a method for controlling the ego-vehicle 10.

A first step S11 of this method comprises determining a lane invasion risk by executing the method for determining the lane invasion risk associated with at least one out of at least two vehicles traveling behind one another on a lane adjacent to an ego-lane on which an ego-vehicle is traveling.

The purpose of this method is to determine whether there is a risk that at least one of the further vehicles 32, 34, 36, 38 invades the ego-lane, i.e. the lane on which the ego-vehicle 10 is traveling. In the example of Figure 2A this is the middle lane.

Such a lane invasion risk especially results from a rear-end collision happening on a lane adjacent to the ego-lane, in the present example the right lane, which may cause one of the vehicles 32, 34, 36, 38 to be pushed into the ego-lane.

In a first step S21 detection data D is received at the data processing apparatus 16 from the sensors 14. The detection data D is indicative of an environment of the ego-vehicle 10 and especially comprises a representation of each of the further vehicles 32, 34, 36, 38.

In a second step S22, a distance is determined between the ego-vehicle 10 and each of the further vehicles 32, 34, 36, 38. This is done based on the detection data D.

In this context, determining a distance comprises determining a directional distance. This means that also a relative location of the further vehicles 32, 34, 36, 38 with respect to the ego-vehicle 10 is determined.

Based thereon, all those of the further vehicles 32, 34, 36, 38 are ignored, which are located at a distance from the ego-vehicle 10 exceeding a predefined distance threshold and/or which are located beside or behind the ego-vehicle 10.

In the example shown in Figure 2A, vehicle 32 is located at a distance from the ego-vehicle 10 exceeding the predefined distance threshold. Thus, vehicle 32 is ignored. Moreover, vehicle 38 is located in the rear of the ego-vehicle 10 when considering the driving direction. Therefore, also vehicle 38 is ignored.

Thereafter, in a third step S23, a distance information L indicative of a distance between each pair of the remaining vehicles 34, 36 is determined based on the detection data D. In the present example, this applies to vehicles 34, 36. Thus, a distance information L indicative of a distance between vehicles 34 and 36 is determined. To this end, a computer vision technique is applied on the detection data D.

Moreover, based on the detection data D and again applying a computer vision technique, a speed information indicative of a speed V1, V2 of each of the vehicles 34, 36 is determined.

Moreover, also within the third step S23, a safe braking distance information indicative of a safe braking distance BD1, BD2 of the vehicles 34, 36 is determined. The safe braking distance BD1, BD2 may be determined for both vehicles 34, 36. Alternatively, the safe braking distance BD1, BD2 may just be determine for the rearward vehicle, in the present case the vehicle 36. To this end, it is determined which of the vehicles 34, 36 is the rearward vehicle with respect to the driving direction. In the example of Figure 2A, vehicle 36 is the rearward vehicle since the driving direction extends from left to right. Again, a computer vision technique may be used for this purpose.

Moreover, in order to determine the safe braking distance BD1, BD2, a vehicle model of the vehicle 36 is determined using a computer vision technique.

Additionally, a database comprising a look-up table containing information on safe braking distances for a specific model as a function of traveling speed is used.

In the example shown in the Figures, such a database forms part of the data storage unit 20. However, it is understood that in other examples, such a database may be provided remote from the ego-vehicle 10. In such an example, the database may be accessed using a wireless data connection, e.g. over the Internet.

Thus, the safe braking distance BD1, BD2 is determined by requesting safe braking distance data indicating the safe braking distance BD1, BD2 from a database based on the determined vehicle model and the traveling speed V1, V2. Thus, the determined vehicle model and the traveling speed V1, V2 are input parameters for the database.

Subsequently, in a fourth step S24, a collision risk between the vehicles 34, 36 is determined based on the safe braking distance information, the distance information and the speed information.

In the present example, this means that an evaluation is performed whether the distance information relates to a distance L being considered sufficient with respect to the safe braking distance BD1, BD2 or not. This means that an evaluation is performed whether the rearward vehicle 36 is able to stop without hitting the leading vehicle 34 in a case in which the leading vehicle 34 performs an abrupt breaking maneuver.

It is noted that, more generally speaking, a collision risk needs to be determined for each pair of vehicles traveling one behind the other on the lane adjacent to the ego-lane, in the present example on the right lane.

It is further noted that the step S24 may only be performed under the condition that the leading vehicle, in the present example vehicle 34, performs an abrupt braking maneuver.

It is noted that in the present example, both the distance L and the speeds V1, V2 are monitored. This means that the distance L and the speeds V1, V2 are continuously or regularly determined based on the detection data D.

It is emphasized that the collision risk is determined without the vehicles 34, 36 actually colliding. The purpose of determining the collision risk is rather to anticipate a potential rear-end collision of the vehicles 34, 36.

Thereafter, in a fifth step S25, a lane invasion risk for the vehicles 34, 36 is determined. As has been mentioned before, the lane invasion risk results from a potential rear-end collision between vehicles 34, 36. Consequently, the lane invasion risk is only determined if a collision risk has been determined in step S24.

In other words, in step S25 it is determined whether one of the vehicles 34, 36 would invade the middle lane, i.e. the ego-lane, following a rear-end collision. As before, this determination is done before such a rear-end collision happens.

The fifth step S25 involves again applying a computer vision technique to the detection data D.

Using the detection data D, a lateral offset O between the vehicles 34, 36 is determined. Moreover, a lateral position P1, P2 on the adjacent lane is determined for each of the vehicles 34, 36 based on the detection data D. Based thereon, a lateral distance A1, A2 of each of the vehicles 34, 36 from the ego-lane may be determined.

Additionally, a width W1, W2 of each of the vehicles 34, 36 is determined using computer vision applied on the detection data D.

Optionally, the fifth step S25 involves receiving a weight information indicative of a weight of each of the vehicles 34, 36 or determining a weight of each of the vehicles 34, 36. In case the weight information is received, it may be received from a database forming part of the data storage unit 20 or from a database being located remote from the ego-vehicle 10.

Based on the above-mentioned data, the lane invasion risk may be determined in accordance with two alternatives.

According to a first alternative, a database comprising turning behavior data is used. In this database, rear end collisions from the past are documented, wherein the documentation involves the above-mentioned data and an indication whether and/or how the vehicles involved in the rear end collision have turned.

Thus, using the above-mentioned data as input parameters, turning behavior data may be received from the database. The turning behavior data indicates a turning behavior of the vehicles 34, 36 in case of a collision. It is noted that the turning behavior is an expected turning behavior in the present context since a collision has not yet happened.

In a case in which the database does not comprise a documented collision characterized by parameters corresponding to the above-mentioned data which is input to the database, a documented collision having a comparatively high or the highest similarity may be used.

As before, such a database may be provided as a part of the data storage unit 20 or remote from the vehicle.

Thus, based on the known turning behavior, a lane invasion risk is known. In other words, if it is known how the vehicles 34, 36 will turn upon a rear-end collision, it is known whether one of the vehicles 34, 36 and rates the ego-lane, in the present example the middle lane.

In a second alternative, a simulation model is provided either on the data storage unit 20 or on a remote computing device. This simulation model is parameterized using the above-mentioned data and a lane invasion risk is determined by executing the simulation model, e.g. using data processing unit 18.

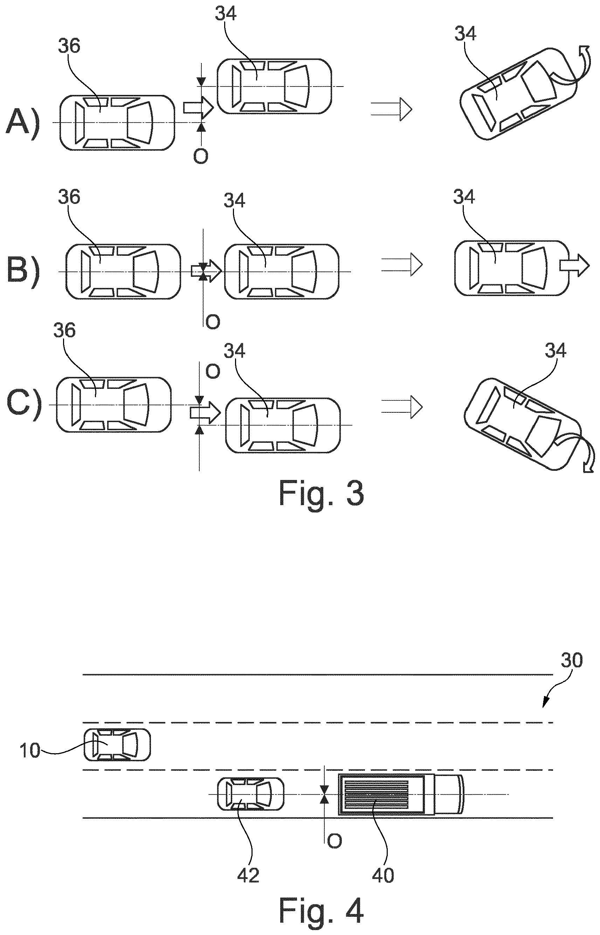

In order to better understand the determination of a invasion risk and the determination of a turning behavior, Figure 3 illustrates three example situations of vehicles 34, 36 and a corresponding turning behavior of the vehicle 34.

In the example of Figure 3A, the vehicle 34 turns counter-clockwise as a consequence of a rear-and collision. In this case, a lane invasion risk may be determined.

In the example of Figure 3B, the vehicle 34 does not turn. Consequently, no lane invasion risk or a very low lane invasion risk is determined.

In the example of Figure 3C, the vehicle 34 turns clockwise following a rear-end collision. When combining this example with the traffic situation of Figure 2A, no lane invasion risk or a comparatively low lane invasion risk may be determined since the vehicle 34 does not turn into the direction of the ego-lane, i.e. the middle lane.

For the traffic situation of Figure 2A, it is assumed that a lane invasion risk has been determined.

Consequently, in a second step S12 of the method for controlling the ego-vehicle 10 an avoidance maneuver is triggered.

In the example of Figure 2, this avoidance maneuver is a lane change maneuver. This means that the ego-vehicle 10 changes lanes, in the present example from the middle lane to the left lane.

Thus, in a situation in which the collision risk and the lane invasion risk materialize and the vehicle 34 invades the middle lane following a rear-end collision between the vehicle 34, 36, the ego-vehicle 10 is not affected. Consequently, a secondary accident involving the ego-vehicle 10 is avoided. This is illustrated in Figure 2B.

Figure 4 shows a second traffic situation. In the following, only the differences with respect to the above-mentioned examples will be explained.

In contrast to the traffic situation of Figure 2, now a truck 40 and a vehicle 42 are traveling one behind another on the right lane. The ego-vehicle 10 is traveling on the middle lane.

In the example of Figure 4, the truck 40 is identified as a truck based on the detection data D and the vehicle 42 is identified as a passenger car based on the detection data D. Moreover, a lateral offset between the truck 40 and the vehicle 42 is determined to be zero or comparatively low.

In such a case, a lane invasion risk is determined to be low or zero since in a case in which the vehicle 42 hits the rear end of the truck, the truck 40 will not turn since it is significantly heavier than the vehicle 42.

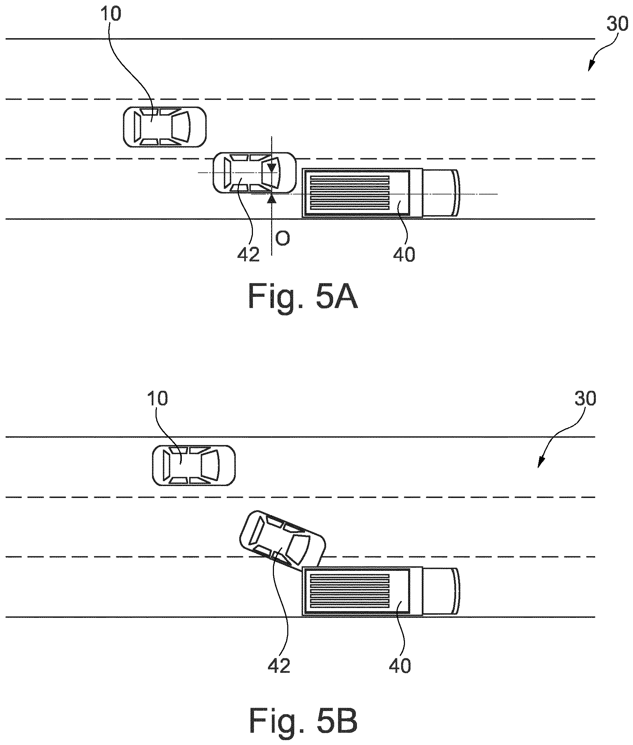

Figures 5A and 5B show another traffic situation at different points in time. As before, only the differences with respect to the previous examples will be explained. Again, the truck 40 and the vehicle 42 being a passenger car are traveling on the right lane and the ego-vehicle 10 is traveling on the middle lane.

In contrast to the example of Figure 4, now the vehicle 42 has a lateral offset with respect to the truck 40. More precisely, when considering the traveling direction, the vehicle 42 is offset to the left. This means that the vehicle 42 is offset towards the middle lane which in the present example is the ego-lane.

In such a case, a lane invasion risk is determined and an avoidance maneuver is triggered in step S12.

In the example of Figure 5, the avoidance maneuver comprises a breaking maneuver of the ego-vehicle 10. Also using this maneuver, a secondary accident is avoided since the ego-vehicle 10 is able to stop before reaching vehicle 42.

It is understood that alternatively, the avoidance maneuver could be a lane change maneuver in Figure 5.

It is noted that in all of the above examples, detection data D comprising a representation of the vehicles 34, 36 on a lane adjacent to an ego-lane is used for determining a lane invasion risk associated with one of the at least two vehicles 34, 36. The vehicles 34, 36 travel behind one another.

It is noted that in the above examples, all steps of the method for determining a lane invasion risk and all steps of the method for controlling the ego-vehicle 10 are executed using the data processing apparatus 16 which forms part of the ego-vehicle 10. However, this is just an example. In another example, the steps S23, S24 and S25 of the method for determining a lane invasion risk are executed on a data processing apparatus remote from the ego-vehicle 10, e.g. a cloud computing device. This also means that step S11 of the method for controlling the ego-vehicle 10 is partly performed on the data processing apparatus remote from the ego-vehicle 10.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: ego-vehicle
- 12: autonomous driving unit
- 14: sensor
- 16: data processing apparatus
- 18: data processing unit
- 20: data storage unit
- 22: computer-readable storage medium
- 24: computer program
- 26: means for carrying out a method for controlling an ego-vehicle
- 28: means for carrying out a method for determining a lane invasion risk associated with at least one out of at least two vehicles traveling behind one another on a lane adjacent to an ego-lane on which an ego-vehicle is traveling
- 30: road
- 32: further vehicle
- 34: further vehicle
- 36: further vehicle
- 38: further vehicle
- 40: truck
- 42: vehicle

- A1: lateral distance from ego-lane
- A2: lateral distance from ego-lane
- BD1: safe braking distance
- BD2: safe braking distance
- D: detection data
- L: distance information
- O: lateral offset
- P1: lateral position on the adjacent lane
- P2: lateral position
- V1: speed
- V2: speed
- W1: width
- W2: width

- S 11: first step of the method for controlling an ego-vehicle
- S12: second step of the method for controlling an ego-vehicle
- S21: first step of the method for determining a lane invasion risk
- S22: second step of the method for determining a lane invasion risk
- S23: third step of the method for determining a lane invasion risk
- S24: fourth step of the method for determining a lane invasion risk
- S25: fifth step of the method for determining a lane invasion risk

## Claims

1. A method for determining a lane invasion risk associated with at least one out of at least two vehicles (34, 36) traveling behind one another on a lane adjacent to an ego-lane on which an ego-vehicle (10) is traveling, the method comprising:
- receiving or determining a distance information indicative of a distance (L) between the at least two vehicles (34, 36), a speed information indicative of a speed (V1, V2) of each of the at least two vehicles (34, 36), and a safe braking distance information indicative of a safe braking distance (BD1, BD2) of at least a rearward one of the at least two vehicles (34, 36) (S23),
- determining a collision risk between the at least two vehicles (34, 36) based on the safe braking distance information, the distance information and the speed information (S24),
- determining a lane invasion risk for the at least one of the at least two vehicles (34, 36) if a collision risk has been determined (S25).

2. The method of claim 1, further comprising receiving detection data (D) comprising a representation of the at least two vehicles (34, 36) (S21) and determining the distance information and/or the speed information based on the detection data (D) (S23).

3. The method of any of the preceding claims, wherein the collision risk between the at least two vehicles (34, 36) is determined, if the leading one of the at least two vehicles (34, 36) performs an abrupt braking maneuver.

4. The method of any of the preceding claims, wherein determining the lane invasion risk further comprises receiving a weight information indicative of a weight of each of the at least two vehicles (34, 36) or determining a weight of each of the at least two vehicles (34, 36).

5. The method of any of the preceding claims, wherein determining a lane invasion risk comprises determining one or more of
- a lateral offset (O) between the at least two vehicles (34, 36) based on the detection data (D),
- a lateral position (P1, P2) on the adjacent lane of the at least two vehicles (34, 36) based on the detection data (D),
- a lateral distance (A1, A2) of each of the at least two vehicles (34, 36) from the ego-lane based on the detection data (D), and
- a width (W1, W2) of each of the at least two vehicles (34, 36).

6. The method of claim 4 or 5, wherein determining a lane invasion risk (S25) further comprises triggering parametrizing and executing a simulation model.

7. The method of any of the preceding claims, wherein determining a lane invasion risk (S25) further comprises receiving turning behavior data indicating a turning behavior of at least one of the at least two vehicles (34, 36) in case of a collision.

8. The method of any of the preceding claims, further comprising
- determining a distance between the ego-vehicle (10) and each of the at least two vehicles (34, 36) indicated by the detection data (D), and
- ignoring all vehicles (32, 38) indicated by the detection data (D) and being located at a distance from the ego-vehicle (10) exceeding a predefined distance threshold (S22) and/or being located behind the ego-vehicle (10) along a traveling direction.

9. The method of any of the preceding claims, wherein determining a safe braking distance (BD1, BD2) of each of the at least two vehicles (34, 36) comprises determining a vehicle model of at least the rearward one of the at least two vehicles (34, 36).

10. The method of claim 9, wherein determining a safe braking distance (BD1, BD2) of each of the at least two vehicles (34, 36) comprises requesting safe braking distance data indicating the safe braking distance (BD1, BD2) from a database based on the determined vehicle model and the monitored traveling speed (V1, V2).

11. A method for controlling an ego-vehicle (10), comprising:
- determining a lane invasion risk using the method according to any of the preceding claims (S1 1), and
- triggering an avoidance maneuver if a lane invasion risk has been determined (S12).

12. A data processing apparatus (16) comprising means (26, 28) for carrying out at least one of the methods of any of the preceding claims.

13. A computer program (24) comprising instructions which, when the computer program (24) is executed by a computer, cause the computer to carry out at least one of the methods of claims 1 to 11.

14. A computer-readable storage medium (22) comprising instructions which, when executed by a computer, cause the computer to carry out at least one of the methods of claims 1 to 11.

15. A use of detection data (D) comprising a representation of at least two vehicles (34, 36) on a lane adjacent to an ego-lane for determining a lane invasion risk associated with one of the at least two vehicles (34, 36), wherein the at least two vehicles (34, 36) travel behind one another.
